# EUROPEAN PATENT APPLICATION

(11) **EP 2 492 314 A2**
(43) Date of publication of application: **29.08.2012**
(21) Application number: 10825215.6
(22) Date of filing: 21.10.2010
(51) Int. Cl.: C08L 67/04, C08L 23/00, C08K 3/00, C08J 5/18

(54) **CLAY-REINFORCED POLY(LACTIC ACID)-POLYOLEFIN ALLOY COMPOSITION**

(30) Priority: 22.10.2009 KR 20090100728
(71) Applicant: LG Chem, Ltd., Seoul 150-721 (KR)
(72) Inventor: YANG, Young Chul, Seoul 135-942 (KR); LEE, Shi-Ho, Seoul 137-044 (KR); KIM, Min Ki, Goyang-si Gyeonggi-do 411-737 (KR); SHIN, Jae Yong, Daejeon 305-509 (KR); CHOI, Yang Suk, Daejeon 302-737 (KR)
(74) Representative: Goddar, Heinz J.
(86) International application number: PCT/KR2010/007250
(87) International publication number: WO 2011/049390

(57) **Abstract**

The present invention relates to a clay-reinforced poly(lactic acid)-polyolefin alloy composition comprising 5-50 wt% of a clay-reinforced poly(lactic acid) resin, 40-90 wt% of a polyolefin, and 5-20 wt% of a compatibiliser. A clay-poly(lactic acid) nanocomposite according to the present invention is used with a polyolefin resin to enable the easy distribution of the clay-poly(lactic acid) nanocomposite into microstructure in the polyolefin resin, thereby showing excellent gas and moisture barrier characteristics, so that the composition is suitable for a molded product requiring barrier properties such as a sheet and a film for food packaging, a fuel tank and a portable fuel tank.

## Description

### [Technical Field]

The present invention disclosed herein relates to a clay-reinforced polylactic acid-polyolefin alloy composition, and more particularly, to an enviroriment-friendly clay-reinforced polylactic acid-polyolefin alloy composition having improved moisture and gas barrier properties by introducing a clay-reinforced polylactic acid to a polyolefin resin.

### [Background Art]

Plastics have been widely used as indispensible packaging materials in modem life due to its excellent physical properties as well as inexpensive and lightweight characteristics.

However, environmental pollution becomes increasingly serious due to a myriad of plastic products produced globally. Plastics, such as polyethylene, polypropylene, and polyethylene terephthalate (hereinafter, referred to as "PET"), have been widely used for general packaging. However, these materials have recently been a cause of global warming due to high calorific values during combustion. Also, plastic products remain almost without decomposition due to its chemical and biological stabilities even in the case that the plastic products are landfilled, and thus, lifetime of a landfill site may decrease. As a result, global warming, depletion of oil resources, and waste disposal issues have recently emerged and thus, interests in plastics using plants or natural materials able to replace typical petrochemical raw materials have rapidly grown.

In particular, interests and developments of biomass plastics using plastics prepared from plants or natural materials instead of plastics manufactured from petrochemical raw materials have been accelerated due to the greenhouse gas reduction agreement of Kyoto Protocol. Biomass plastics, such as polyglycolic acid, polylactic acid, polycaprolactone, and aliphatic polyester, have been known. Among these biomass plastics, the polylactic acid is a plant-based material obtained by polymerization of a lactic acid and at this time, a crystalline or amorphous polylactic acid may be prepared according to a content of an optical isomer of the lactic acid. The polylactic acid is inexpensive and has excellent physical properties as compared to those of other typical biodegradable plastics and thus, has been widely used, accounting for 20% of total bioplastics.

Major applications of a polylactic acid resin up to date are disposable products using biodegradable properties of the polylactic acid, e.g., films, wraps, or food containers. Polylactic acids are developed and currently in production in companies such as Naturworks LLC in the United States and Toyota in Japan. However, the polylactic acid resin accompanies decomposition caused by heat or moisture and thus, may be difficult to be used in a field requiring durability and barrier property.

Also, since the polylactic acid resin has low resistance to temperature, a shape of a molded product may be deformed when an outside temperature is increased to 60°C or more. Therefore, many attempts have been made to apply the polylactic acid resin by blending with general plastics instead of using it alone.

### [Disclosure]

### [Technical Problem]

The present invention provides a clay-reinforced polylactic acid-polyolefin composite resin composition having excellent moldability and barrier property by resolving the foregoing limitations.

The object of the present invention is not limited to the aforesaid, but other objects not described herein will be clearly understood by those skilled in the art from descriptions below.

### [Technical Solution]

In the present invention, a polylactic acid is not used alone but a clay-polylactic acid nanocomposite reinforced with clay is used by being blended with a polyolefin resin and thus, the clay-polylactic acid nanocomposite is dispersed in a micro-layer shape in the polyolefin resin matrix by single-layer blow molding. As a result, moisture and gas barrier properties of polyolefin may be improved and deformation due to heat or moisture is not generated, and thus, limitations of the related art may be resolved.

### [Advantageous Effects]

A clay-polylactic acid nanocomposite, according to the present invention is used by being blended with a polyolefin resin and thus, the clay-polylactic acid nanocomposite is easily dispersed in microstructures in the polyolefin resin to obtain excellent gas and moisture barrier properties. Therefore, the clay-polylactic acid nanocomposite according to the present invention is suitable for a molded product requiring barrier properties, e.g., sheet and film for food packaging, a fuel tank, and a portable fuel container.

### [Description of Drawings]

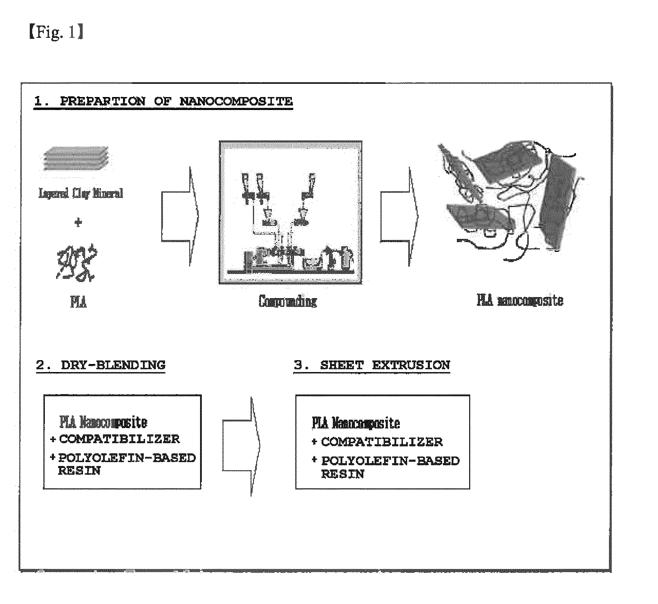

FIG. 1 illustrates a preparation process of a clay-reinforced polylactic acid nanocomposite according to the present invention and a process of obtaining a film from a composition including the clay-reinforced polylactic acid nanocomposite.

### [Best Mode]

The present invention provides a clay-reinforced polylactic acid-polyolefin alloy composition including 5 wt% to 50 wt% of a clay-reinforced polylactic acid resin, 40 wt% to 90 wt% of a polyolefin, and 5 wt% to 20 wt% of a compatibilizer.

Hereinafter, each component constituting the clay-reinforced polylactic acid-polyolefin alloy composition according to an embodiment of the present invention will be described in detail.

### (A) Clay-reinforced polylactic acid (PLA) resin

In general, a polylactic acid resin is a polyester-based resin which is prepared by an ester reaction of a lactic acid obtained through decomposition of corn starch as a monomer. The polylactic acid resin is composed of an L-lactic acid, D-lactic acid, or L,D-lactic acid, in which these polylactic acids may be used alone or in combinations thereof. In consideration of hydrolysis resistance, a polylactic acid resin composed of 95 wt% to 100 wt% of the L-lactic acid and 0 wt% to 5 wt% of the D-lactic acid may be used. Also, molecular weight or molecular weight distribution of the polylactic acid resin is not particularly limited within a processable range, but, for example, weight-average molecular weight of the polylactic acid resin may be 80,000 or more.

Further, clay used in the present invention may be an organically modified layered compound in which an organic is disposed between layers of a layered clay compound. An organic content in the layered clay compound may be in a range of 1 wt% to 45 wt%. When the organic content is less than 1 wt%, compatibility between the layered clay compound and the polylactic acid may decrease, and when the organic content is more than 45 wt%, intercalation of a polylactic acid chain may not be facilitated.

The layered clay compound may be one or more selected from the group consisting of montmorillonite, bentonite, kaolinite, mica, hectorite, fluorohectorite, saponite, beidelite, nontronite, stevensite, vermiculite, hallosite, volkonskoite, suconite, magadite, and kenyalite.

The organic may include a functional group selected from the group consisting of quaternary ammonium, phosphonium, maleate, succinate, acrylate, benzylic hydrogen, distearyldimethyl ammonium, and oxazoline.
In the present invention, the polylactic acid resin is reinforced with the clay to prepare a clay-polylactic acid nanocomposite and the clay-reinforced polylactic acid resin may include 0.01 to 10 parts by weight of the clay based on 100 parts by weight of the polylactic acid resin for uniform dispersion of the clay.

As shown in the following FIG. 1, when a nanoclay (clay compound) having a layered structure and the polylactic acid are compounded, each layer constituting the clay compound is inserted between chains of the polylactic acid to form a clay-polylactic acid nanocomposite structure.

When the clay-polylactic acid nanocomposite is later mixed with a polyolefin-based resin, the clay-polylactic acid nanocomposite is dispersed in a matrix of the polyolefin-based resin in a micro-layer shape, and thus, such structural characteristics may play a role in improving barrier properties insufficient in the polyolefin-based resin.

The clay-reinforced polylactic acid resin in the alloy composition according to the present invention may be included in an amount range of 5 wt% to 50 wt%.

### (B) Polyolefin-based resin

The polyolefin-based resin used in the present invention may be one or more selected from the group consisting of a high density polyethylene (HDPE), a low density polyethylene (LDPE), a linear low density polyethylene (LLDPE), an ethylene-propylene copolymer (EPDM), metallocene polyethylene, and polypropylene. The polypropylene may be used by being selected from the group consisting of a propylene homopolymer, a propylene copolymer, metallocene polypropylene, and a composite resin in which physical properties of general polypropylene are reinforced by adding talc and flame retardant into the homopolymer or copolymer.

The polyolefin-based resin may be included in an amount range of 40 wt% to 90 wt% of the total composition in terms of processability.

The polyolefin-based resin plays a role as a matrix which allows the prepared clay-polylactic acid nanocomposite to be uniformly dispersed therein.

### (C) Compatibilizer

A hydrocarbon-based polymer containing a polar group may be used as a compatibilizer of the present invention. When the hydrocarbon-based polymer containing a polar group is used, affinity between the compatibilizer and the polyolefin resin or the compatibilizer and the clay-reinforced polylactic acid resin is increased by a hydrocarbon polymer part formed of a base of the polymer to form a stable structure in the resin composition thus obtained.

One or more compounds selected from the group consisting of an epoxy-modified polystyrene copolymer, an ethylene-ethylene anhydride-acrylic acid copolymer, an ethylene-ethyl acrylate copolymer, an ethylene-alkyl acrylate-acrylic acid copolymer, a maleic anhydride modified (graft) high-density polyethylene, a maleic anhydride modified (graft) linear low-density polyethylene, an ethylene-alkyl methacrylate-methacrylic acid copolymer, an ethylene-butyl acrylate copolymer, an ethylene-vinyl acetate copolymer, and a maleic anhydride modified (graft) ethylene-vinyl acetate copolymer, or a modification thereof may be used as the hydrocarbon-based polymer.

When the epoxy-modified polystyrene copolymer among the foregoing compounds is used as a compatibilizer, the epoxy-modified polystyrene copolymer may include a main chain composed of 70 to 99 parts by weight of styrene and 1 to 30 parts by weight of an acryl-based monomer expressed as the following Chemical Formula 1; and a branch composed of 1 to 80 parts by weight of an epoxy compound of the following Chemical Formula 2. 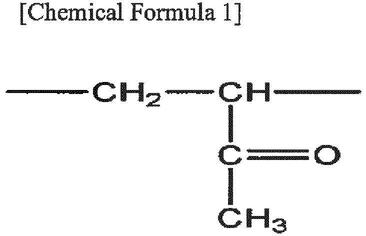 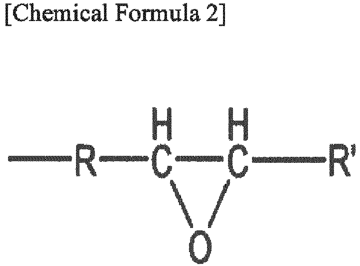 where, R and R' are residues of aliphatic compounds with a carbon number of 1 to 20 each independently having a double bond group at a terminal of a molecular structure; or residues of aromatic compounds with a carbon number of 5 to 20.

Also, when the maleic anhydride modified (graft) high-density polyethylene, the maleic anhydride modified (graft) linear low-density polyethylene, and the maleic anhydride modified (graft) ethylene-vinyl acetate copolymer, each compound may be composed of a branch formed of 0.1 to 10 parts by weight of a maleic anhydride based on 100 pars by weight of a main chain.

In the present invention, the compatibilizer may be included in an amount range of 5 wt% to 20 wt% in terms of easy processability.

A method of preparing a clay-reinforced polylactic acid-polyolefin alloy composition of the present invention includes (a) compounding nanoclay and a polylactic acid to prepare a clay-polylactic acid nanocomposite, (b) dry-blending the clay-poly lactic acid nanocomposite, a polyolefin, and a compatibilizer to prepare a clay-polylactic acid nanocomposite blend, after operation (a), and (c) introducing the clay-polylactic acid nanocomposite blend into an extruder to extrude, after operation (b).

In operation (a), specifically, the polylactic acid is introduced into a main hopper of a twin screw extruder, the nanoclay is separately introduced into a side feeder, and extrusion conditions include an extrusion temperature range of 180°C to 200°C, a screw velocity range of 280 rpm to 320 rpm, and a discharge rate range of 8 kg/hour to 12 kg/hour, and the extrusion is smooth within the foregoing conditions of extrusion temperature, screw velocity, and discharge rate.

The dry-blending in operation (b) is a concept in contrast with melt blending, and the dry-blending denotes that the clay-polylactic acid nanocomposite, the compatibilizer, and the polyolefin in the composition are mixed while maintaining a pellet form. When a film is prepared by dry-blending the composition as in the present invention, the polylactic acid is dispersed in a disk shape in the composition to act as a barrier layer, and may have an effect of improving barrier properties by lengthening a penetration path of gas or a solvent. However, when the composition is subjected to melting blending, an effect of improving barrier properties may not be obtained because the polylactic acid does not act as a barrier layer by being dispersed in a droplet form in the composition. A temperature of the dry-blending is in a range of 70°C to 120°C and mixing of the composition may be facilitated within the foregoing range.

Operation (c) is a typical method known in the art, and detailed specifications thereof, such as conditions, are not particularly limited.

A process of preparing a final film from the composition according to the present invention is illustrated in FIG. 1 below.

The composition prepared by dry-blending is molded in a pellet form and the pellets are again extruded to prepare a sheet or film. The sheet or film of the present invention prepared through the foregoing process may significantly improve inherent gas and moisture barrier properties of a polyolefin-based resin and thus, may be suitable to be used in various molded products requiring barrier properties. Although a form of the molded product in the present invention is described as a sheet or film, the form thereof is not limited thereto so long as the molded product is used in a field requiring barrier properties.

Hereinafter, the present invention will be described in detail with reference to examples of the present invention. However, the following examples are merely presented to exemplify the present invention, and the scope of the present invention is not limited thereto.

The following Table 1 summarizes polyolefin resins, a polylactic acid, clay, and compatibilizers used in the present invention.

**Table 1**

| Component | Product | Manufacturer |
|---|---|---|
| HDPE | PB160 | LG Chem, Ltd. |
| PP | M710 | LG Chem, Ltd. |
| LDPE | 2700J | LG Chem, Ltd. |
| PLA (Polylactic acid) | LACTY 9030 | Shimadzu Corporation |
| Clay | Closite 30B | SCP, U.S.A |
| HDPE-g-MAH | PB3009 | Chemtura |
| HDPE-g-MAH | MB100DH | DUPONT |
| PP-g-MAH | PB 3002 | Polybond |
| LLDPE-g-MAH | MB226DY | DUPONT |

### Examples 1 to 3

Using compositions in the following Table 2, 97% PLA, 3% nanoclay, and IR 1010 (thermal stabilizer) were dry-blended by using a co-rotating twin screw extruder f40 (SM PLATEK, Co., Ltd) having a screw speed of 200 rpm and a charge rate of 40 kg/hr and then introduced into a main hopper.

**Table 2**

| Content: Parts by weight | Clay-reinforced PLA | Compatibilizer | | | Polyolefin-based resin | | |
|---|---|---|---|---|---|---|---|
| | | LLDPE-g-MAH | HDPE-g-MAH | PP-g-MAH | LDPE | PP | HDPE |
| Example 1 | 8 | - | - | 8 | | 84 | - |
| Example 2 | 8 | 8 | - | - | 84 | - | - |
| Example 3 | 8 | - | 8 | - | - | - | 84 |

The dry-blended compositions were introduced into a molding machine (Kyung Won hydraulic machinery Co., Ltd., 90 mm 3 head blow machine, 10 rpm) at barrel (160°C-170°C-180°C-180°C), adopter (180°C), and die (190°C-190°C-190°C) temperatures, and were then formed into pellets and the pellets were extruded to prepare films.

### Comparative Examples 1 to 6

In Comparative Examples, a polylactic acid itself was used instead of the clay-reinforced polylactic acid nanocomposite used in Examples and compositions in the following Table 3 were dry-blended by using a co-rotating twin screw extruder f40 (SM PLATEK, Co., Ltd) having a screw speed of 200 rpm and a charge rate of 40 kg/hr and then introduced into a main hopper.

**Table 3**

| Content: Parts by weight | PLA | Compatibilizer | | | Polyolefin-based resin | | |
|---|---|---|---|---|---|---|---|
| | | LLDPE-g-MAH | HDPE-g-MAH | PP-g-MAH | PP | LDPE | HDPE |
| Comparative Example 1 | - | - | - | - | 100 | - | - |
| Comparative Example 2 | - | - | - | - | - | 100 | - |
| Comparative Example 3 | - | - | - | - | - | - | 100 |
| Comparative Example 4 | 8 | - | - | 8 | 84 | - | - |
| Comparative Example 5 | 8 | 8 | - | - | - | 84 | - |
| Comparative Example 6 | 8 | - | 8 | - | - | - | 84 |

The compositions were introduced into a molding machine (Kyung Won hydraulic machinery Co., Ltd., 90 mm 3 head blow machine, 10 rpm) at barrel (160°C-170°C-180°C-180°C), adopter (180°C), and die (190°C-190°C-190°C) temperatures, and were then formed into pellets and the pellets were extruded to prepare films.

### Experimental Example

500 µm thick films prepared in Examples 1 to 3 and Comparative Examples 1 to 6 were left standing for 24 hours under conditions of a temperature of 23°C and a relative humidity of 50%, and oxygen barrier properties were then measured by using a gas permeability tester (Mocon OX-TRAN 2/20, U.S.A), and the same films were left standing for one day under conditions of a temperature of 38°C and a relative humidity of 100%, and moisture barrier properties were then measured by using a water vapor transmission rate tester (Mocon PERMATRAN 3/33, U.S.A). The results thereof are presented in the following Table 4.

**Table 4**

| Category | Oxygen barrier property (cc, 500 µm/m³, day, atm) | Moisture barrier property (cc, 500 µm/m³, day, atm) |
|---|---|---|
| Example 1 | 54 | 1.9 |
| Example 2 | 84 | 2.76 |
| Example 3 | 34 | 1.36 |
| Comparative Example 1 | 160 | 1.2 |
| Comparative Example 2 | 330 | 0.31 |
| Comparative Example 3 | 120 | 1.2 |
| Comparative Example 4 | 150 | 2.52 |
| Comparative Example 5 | 323 | 3.2 |
| Comparative Example 6 | 109 | 2.15 |

As shown in the results of Table 4, it may be confirmed that oxygen and moisture barrier properties of the films obtained from the compositions including the clay-polylactic nanocomposite reinforced with clay as in the present invention were greatly improved than those of Comparative Examples in which the polylactic acids itself were used.

Since the films obtained from the compositions of the present invention had excellent gas and moisture barrier properties, the films may be suitable for a molded product requiring barrier properties, e.g., sheet and film for food packaging, a fuel tank, and a portable fuel container.

## Claims

1. A clay-reinforced polylactic acid-polyolefin alloy composition comprising:
5 wt% to 50 wt% of a clay-reinforced polylactic acid resin;
40 wt% to 90 wt% of a polyolefin; and
5 wt% to 20 wt% of a compatibilizer.

2. The clay-reinforced polylactic acid-polyolefin alloy composition of claim 1, wherein the clay-reinforced polylactic acid-polyolefin alloy composition comprises 0.01 to 10 parts by weight of clay based on 100 parts by weight of a polylactic acid resin.

3. The clay-reinforced polylactic acid-polyolefin alloy composition of claim 1, wherein the polylactic acid resin is one or more selected from the group consisting of an L-lactic acid, a D-lactic acid, and an L,D-lactic acid.

4. The clay-reinforced polylactic acid-polyolefin alloy composition of claim 1, wherein the clay is an organically modified layered compound including an organic content of 1 wt% to 45 wt%.

5. The clay-reinforced polylactic acid-polyolefin alloy composition of claim 1, wherein the polyolefin is selected from the group consisting of a HDPE (high density polyethylene), a LDPE (low density polyethylene), a LLDPE (linear low density polyethylene), an ethylene-propylene copolymer, metallocene-polyethylene, a polypropylene homopolymer, a polypropylene copolymer, metallocene-polypropylene, and a reinforced-composite resin of the polypropylene homopolymer or copolymer.

6. The clay-reinforced polylactic acid-polyolefin alloy composition of claim 1, wherein the compatibilizer is a hydrocarbon-based polymer containing a polar group.

7. The clay-reinforced polylactic acid-polyolefin alloy composition of claim 6, wherein the hydrocarbon-based polymer containing a polar group is one or more compounds selected from the group consisting of an epoxy-modified polystyrene copolymer, an ethylene-ethylene anhydride-acrylic acid copolymer, an ethylene-ethyl acrylate copolymer, an ethylene-alkyl acrylate-acrylic acid copolymer, a maleic anhydride modified (graft) high-density polyethylene, a maleic anhydride modified (graft) linear low-density polyethylene, an ethylene-alkyl methacrylate-methacrylic acid copolymer, an ethylene-butyl acrylate copolymer, an ethylene-vinyl acetate copolymer, and a maleic anhydride modified (graft) ethylene-vinyl acetate copolymer, or a modification thereof.

8. A method of preparing a clay-reinforced polylactic acid-polyolefin alloy composition, the method comprising:
(a) compounding nanoclay and a polylactic acid to prepare a clay-polylactic acid nanocomposite;
(b) dry-blending the clay-polylactic acid nanocomposite, a polyolefin, and a compatibilizer to prepare a clay-polylactic acid nanocomposite blend, after operation (a); and
(c) introducing the clay-polylactic acid nanocomposite, blend into an extruder to extrude, after operation (b).

9. The method of claim 8, wherein, in operation (a), the polylactic acid is introduced into a main hopper of a twin screw extruder, the nanoclay is separately introduced into a side feeder, and extrusion conditions include an extrusion temperature range of 180°C to 200°C, a screw velocity range of 280 rpm to 320 rpm, and a discharge rate range of 8 kg/hour to 12 kg/hour.

10. The method of claim 8, wherein a temperature of the dry-blending in operation (b) is in a range of 70°C to 120°C.

11. A film comprising the composition of any one of claims 1 to 7.

12. The film of claim 11, wherein oxygen barrier property (cc, 500 µm/m³, day, atmosphere) of the film is a value of 100 or less.

13. The film of claim 11, wherein moisture barrier property (cc, 500 µm/m³, day, atmosphere) of the film is a value of 3 or less.
